# EUROPEAN PATENT SPECIFICATION

(11) **EP 2 924 766 B1**
(45) Date of publication and mention of the grant of the patent: **17.05.2017**
(21) Application number: 15159134.4
(22) Date of filing: 16.03.2015
(51) Int. Cl.: H01M 14/00, H01G 11/56, H01G 11/84

(54) **ELECTRICAL STORAGE DEVICE AND METHOD FOR MANUFACTURING ELECTRICAL STORAGE DEVICES**
ELEKTRISCHE SPEICHERVORRICHTUNG UND VERFAHREN ZUR HERSTELLUNG ELEKTRISCHER SPEICHERVORRICHTUNGEN
DISPOSITIF DE STOCKAGE ÉLECTRIQUE ET PROCÉDÉ DE FABRICATION DE TELS DISPOSITIFS

(30) Priority: 24.03.2014 JP 2014059571; 17.07.2014 JP 2014146432; 31.10.2014 JP 2014223009
(43) Date of publication of application: 30.09.2015
(73) Proprietor: Panasonic Intellectual Property Management Co., Ltd., Osaka-shi, Osaka 540-6207 (JP)
(72) Inventor: Habuta, Haruhiko, Osaka-shi, Osaka 540-6207 (JP); Nomura, Yuki, Osaka-shi, Osaka 540-6207 (JP); Sagara, Akihiko, Osaka-shi, Osaka 540-6207 (JP); Fujinoki, Norihito, Osaka-shi, Osaka 540-6207 (JP)
(74) Representative: Grünecker Patent- und Rechtsanwälte PartG mbB

(56) References cited:
- EP-A2- 2 469 629
- WO-A1-2013/146916
- CA-A1- 2 853 599
- US-A- 4 084 043
- US-A1- 2003 113 625
- US-A1- 2005 003 085
- US-A1- 2012 009 449
- US-A1- 2013 230 772

## Description

### BACKGROUND

### 1. Technical Field

The present disclosure relates to electrical storage devices, and to methods for manufacturing such electrical storage devices.

### 2. Description of the Related Art

With the recent proliferation of digital information devices, there has been a demand that the performance of electrical storage devices used as power supplies be further enhanced. Lithium secondary batteries and capacitors are becoming widespread in the field of automobiles as power sources for hybrid vehicles and electrical vehicles.

Lithium ion secondary batteries that have been introduced commercially are composed of a positive electrode, a negative electrode and an electrolyte disposed between the electrodes. Nonaqueous electrolytic solutions are widely used as the electrolytes. However, the fact that nonaqueous electrolytic solutions are flammable leads to an increase in cost. It is because the installation of safety devices for suppressing a temperature rise in the event of short circuits is needed. In addition, the development of techniques for preventing the occurrence of short circuits is needed. An approach to reducing the cost is all-solid-state batteries that are entirely composed of solid materials.

All-solid-state lithium ion batteries involving solid electrolytes are classified into a bulk type and a thin-film type. The bulk type is produced by stacking positive and negative electrode active materials and a solid electrolyte powder followed by the calcination of the stack. The thin-film type is produced by forming films of respective materials by a film-forming method such as sputtering (see J. B. Bates et al., Characterization of Thin-Film Rechargeable Lithium Batteries with Lithium Cobalt Oxide Cathodes, Journal of The Electrochemical Society, 143, pp. 3203-3213 (1996)). Both types have a reduced occurrence of side reactions because of the fact that only lithium ions are diffused in the solid electrolyte, thus realizing a long life.

Other all-solid-state batteries other than the lithium ion batteries are semiconductor electrical storage devices which include a charging layer that is formed of n-type semiconductor nanoparticles coated with an insulating material (see WO 2012/046325 or CA 2 853 599, for example). Such electrical storage devices are charged by capturing electrons into an energy level formed in a bandgap of the n-type semiconductor nanoparticles. WO 2012/046325 and CA 2 853 599 discloses that titanium oxide, tin oxide and zinc oxide are used as the n-type semiconductor nanoparticles. Other related techniques are described in Japanese Unexamined Patent Application Publication No. 2007-5279, Japanese Unexamined Patent Application Publication No. 2009-146581, EP 2469 629 A2, US 2013/0230772 A1, US 2003/0113625 A, US 2012/0009449 A, US 2005/0003085 A1 and WO 2013/065093.

### SUMMARY

In one general aspect, the techniques disclosed here feature an electrical storage device including a stack structure, the stack structure including: a conductive first electrode layer, a conductive second electrode layer, a charging layer disposed between the first electrode layer and the second electrode layer, the charging layer including a mixture containing an insulating material and at least one metal oxide selected from the group consisting of niobium oxide, tantalum oxide and molybdenum oxide, the at least one metal oxide being an n-type semiconductor, and a p-type semiconductor disposed between the charging layer and the second electrode layer.

According to the above technique, the electrical storage device is producible at low cost because of the simple configuration and also exhibits high capacity.

It should be noted that general or specific embodiments may be implemented as a device, a system, a method, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE DRAWINGS

Fig. 1 is a schematic sectional view illustrating an electrical storage device according to an embodiment of the present disclosure;
Fig. 2 is a view illustrating a structure of a charging layer of the electrical storage device shown in Fig. 1;
Fig. 3 is a process chart illustrating a method for manufacturing the electrical storage device shown in Fig. 1;
Fig. 4 is a graph illustrating discharge characteristics of electrical storage devices of Example 1 and Comparative Example 1;
Fig. 5 is a graph illustrating discharge characteristics of an electrical storage device of Example 2;
Fig. 6 is a graph illustrating discharge characteristics of an electrical storage device of Example 3; and
Fig. 7 is a graph illustrating discharge characteristics of an electrical storage device of Example 4.

### DETAILED DESCRIPTION

### Underlying Knowledge Forming Basis of the Present Disclosure

The development of solid electrolyte materials, positive electrode materials and negative electrode materials is necessary for the enhancement in the battery performance of all-solid-state lithium ion batteries. In particular, bulk-type batteries have a small area of contact between the electrode and the electrolyte as compared to in the case of liquid electrolytes because the electrochemical reaction interface is formed as a result of contact between solid particles. This fact makes the fabrication of high-performance batteries difficult.

In order to enhance the performance of all-solid-state batteries including solid electrolytes such as inorganic solid electrolytes, it is necessary to develop solid electrolytes that exhibit high conductivity at room temperature and also to develop enhanced positive electrode materials and negative electrode materials. It is also necessary to establish a good solid interface between the electrode and the electrolyte. These challenges make it difficult to achieve high capacity in a stable manner. Another difficulty that is encountered is easy deterioration in battery characteristics due to charging/discharging cycles. Further, the fabrication of battery components entails prolonged heat treatment of materials at high temperatures, and the materials are degraded during such a treatment to make it difficult to fabricate high-performance batteries.

One non-limiting and exemplary embodiment provides an all-solid-state high-capacity electrical storage device involving a semiconductor which is free from the risk of liquid leakage or ignition and which has a simple thin-film configuration and is producible at lower cost than when an electrolytic solution is used, and also provides a method for manufacturing such electrical storage devices.

One general aspect of the present disclosure resides in an electrical storage device including a stack structure, the stack structure including: a conductive first electrode layer, a conductive second electrode layer, a charging layer disposed between the first electrode layer and the second electrode layer, the charging layer including a mixture containing an insulating material and at least one metal oxide selected from the group consisting of niobium oxide, tantalum oxide and molybdenum oxide, the at least one metal oxide being an n-type semiconductor, and a p-type semiconductor disposed between the charging layer and the second electrode layer.

According to the present disclosure, the electrical storage devices achieve an increase in discharge capacity. That is, the discharge characteristics of the electrical storage devices may be enhanced by providing a charging layer that includes a mixture containing an insulating material and at least one metal oxide selected from the group consisting of niobium oxide, tantalum oxide and molybdenum oxide.

The at least one metal oxide may be niobium oxide as an essential component.

The at least one metal oxide may be tantalum oxide as an essential component.

The at least one metal oxide may be molybdenum oxide as an essential component.

The electron barrier layer made of the p-type semiconductor sufficiently prevents the movement of electrons from the second electrode layer to the charging layer.

The first electrode layer or the second electrode layer may include a metal or an alloy including at least one metal element selected from the group consisting of aluminum, gold, chromium, copper, iron, molybdenum, nickel, palladium, platinum and tungsten.

The electrical storage device of the present disclosure may further include a substrate disposed on an outside of the first electrode layer. In the present disclosure, the phrase "the outside of the first electrode layer" refers to the side of the first electrode layer opposite to the charging layer side.

The p-type semiconductor may include nickel oxide, copper oxide, copper aluminum oxide or tin oxide. The electron barrier layer made of such a material may sufficiently prevent the movement of electrons from the second electrode layer to the charging layer.

The insulating material may include silicon oxide.

The insulating material may be a silicone.

The substrate may be a flexible insulating sheet.

In the present disclosure, the charging layer may be such that fine particles of the at least one metal oxide are dispersed in the insulating material. With this configuration, the charge/discharge characteristics of the electrical storage device may be enhanced.

Another general aspect of the present disclosure resides in a method for manufacturing an electrical storage device including a first electrode layer, a charging layer, a p-type semiconductor and a second electrode layer stacked on top of one another in this order, the method including:
preparing a coating liquid by dissolving at least one metal salt and an insulating material into an organic solvent, the at least one metal salt being selected from the group consisting of aliphatic acid niobium salts, aliphatic acid tantalum salts, aliphatic acid molybdenum salts, aromatic acid niobium salts, aromatic acid tantalum salts and aromatic acid molybdenum salts,
applying the coating liquid to the first electrode layer to form a coating film,
calcining the coating film,
irradiating the calcined coating film with UV ray to form the charging layer including a mixture containing the insulating material and at least one metal oxide, the at least one metal oxide being an n-type semiconductor, and
after the formation of the charging layer, forming the p-type semiconductor and the second electrode layer in this order.

By the electrical storage device manufacturing method of the present disclosure, the electrical storage devices of the present disclosure may be obtained efficiently.

Hereinbelow, the present disclosure will be described with reference to the drawings. The scope of the present disclosure is not limited to the following embodiments.

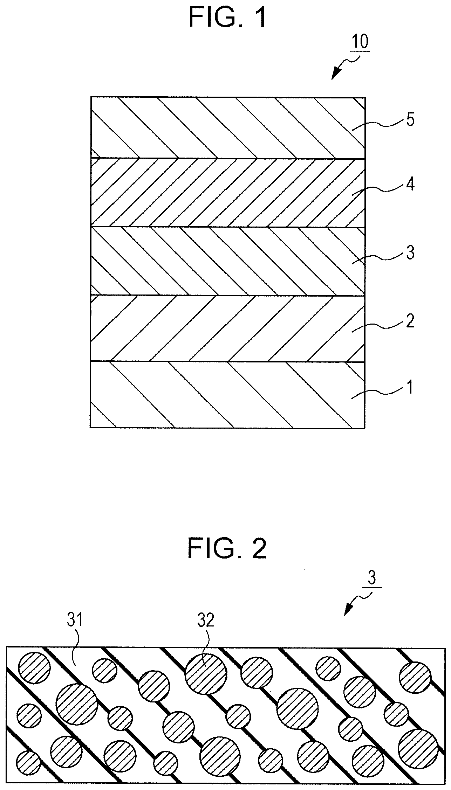

As illustrated in Fig. 1, an electrical storage device 10 includes a conductive first electrode layer 2, a charging layer 3, an p-type semiconductor 4 and a conductive second electrode layer 5. In the electrical storage device 10, the first electrode layer 2, the charging layer 3, the p-type semiconductor 4 and the second electrode layer 5 are stacked on top of one another in this order. As used herein, the phrase "stacked on top of one another in this order" may also mean that the layers are stacked in the reversed order, namely, in the order of the second electrode layer 5, the p-type semiconductor 4, the charging layer 3 and the first electrode layer 2. Intermediate layers may be disposed appropriately between adjacent layers. In other words, the electrical storage device 10 has a stack structure in which the charging layer 3 is disposed between the first electrode layer 2 and the second electrode layer 5, and the p-type semiconductor 4 is disposed between the charging layer 3 and the second electrode layer 5.

The electrical storage device 10 may further include a substrate 1 on an outside of the first electrode layer 2 or the second electrode layer 5. The phrase "the outside of the first electrode layer 2" refers to the side of the first electrode layer 2 opposite to the charging layer 3 side. The phrase "the outside of the second electrode layer 5" indicates the side of the second electrode layer 5 opposite to the p-type semiconductor 4 side. The substrate 1 may be composed of an insulating material or a conductive material. The substrate 1 may be rigid or flexible. Examples of the substrates 1 include glass substrates, resin sheets such as polymer films, metal plates, metal foils, and combinations of any of these materials. The substrate 1 may be a flexible sheet. The flexible sheet may be insulating. When the substrate 1 is a flexible sheet, the electrical storage device 10 may be curved or folded. The substrate 1 may have an irregular or uneven structure. In such a case, the surface area per unit area of the substrate 1 may be increased, and the capacity of the electrical storage device may be enhanced.

The first electrode layer 2 and the second electrode layer 5 are not particularly limited as long as each of the electrode layers includes a conductive material so as to exhibit conductive properties. Examples of such conductive materials include metals, conductive oxides, conductive resins, conductive carbons and combinations of any of these materials.

In the case of metal electrodes, it is possible to use any of metal films and alloy films including at least one metal element selected from the group consisting of aluminum, gold, chromium, copper, iron, molybdenum, nickel, palladium, platinum and tungsten. Stack films including a stack of a plurality of the above metals may be used as the electrodes as long as the electrical storage device 10 performs properly.

Examples of the conductive oxides in the present embodiment include indium oxide, tin oxide, zinc oxide, antimony oxide and mixtures of any of these oxides. Indium tin oxide (ITO) is another conductive oxide which may be used to obtain a transparent conductive electrode. The transparent conductive electrodes are not limited to ITO and may be tin oxide, zinc oxide or a mixture thereof.

Examples of the conductive resins in the present embodiment include polyacetylene, polythiophene, polyaniline, polypyrrole, poly-p-phenylene, poly-p-phenylenevinylene, polyfluorene, polythienylenevinylene, polyethylenedioxythiophene, polyacene and mixtures of any of these resins.

Examples of the conductive carbons in the present embodiment include carbon black, conductive diamond, conductive graphite and combinations of any of these materials.

As illustrated in Fig. 2, the charging layer 3 is composed of a mixture of an insulating material 31 and at least one metal oxide 32.

The insulating material 31 is desirably a heat-resistant insulating material. Examples of the insulating material 31 include inorganic insulating materials, insulating resins and mixtures of any of these materials.

Examples of the inorganic insulating materials in the present embodiment include oxides, nitrides, oxynitrides, mineral oils, paraffins and mixtures of any of these materials. Examples of the oxides in the present embodiment include metal oxides such as silicon oxide (Si-O), magnesium oxide (Mg-O), aluminum oxide (Al-O) and mixtures of any of these oxides. Typical examples of the metal oxides in the present embodiment include SiO₂, MgO, Al₂O₃ and mixtures of any of these oxides. Examples of the nitrides in the present embodiment include metal nitrides such as germanium nitride (Ge-N), chromium nitride (Cr-N), silicon nitride (Si-N), aluminum nitride (Al-N), niobium nitride (Nb-N), molybdenum nitride (Mo-N), titanium nitride (Ti-N), zirconium nitride (Zr-N), tantalum nitride (Ta-N) and mixtures of any of these nitrides. Examples of the oxynitrides in the present embodiment include metal oxynitrides such as germanium oxynitride (Ge-O-N), chromium oxynitride (Cr-O-N), silicon oxynitride (Si-O-N), aluminum oxynitride (Al-O-N), niobium oxynitride (Nb-O-N), molybdenum oxynitride (Mo-O-N), titanium oxynitride (Ti-O-N), zirconium oxynitride (Zr-O-N), tantalum oxynitride (Ta-O-N) and mixtures of any of these oxynitrides. Examples of the inorganic insulating materials in the present embodiment include silicon oxide materials including silicon and oxygen such as silicon oxide (Si-O) and silicon oxynitride (Si-O-N).

Examples of the insulating resins in the present embodiment include silicones, polyethylenes, polypropylenes, polystyrenes, polybutadienes, polyvinyl chlorides, polyesters, polymethyl methacrylates, polyamides, polycarbonates, polyacetals, polyimides, ethyl celluloses, cellulose acetates, phenolic resins, amino resins, unsaturated polyester resins, acrylic resins, allyl resins, alkyd resins, epoxy resins, melamine resins, urea resins, vinylidene chloride resins, ABS resins, polyurethanes, Neoprene, celluloids, polyvinyl formals, silicone resins, fused fluororesins and mixtures of any of these resins. The insulating resins in the present embodiment may be thermoplastic resins or thermosetting resins.

The at least one metal oxide 32 includes at least one selected from the group consisting of niobium oxide, tantalum oxide and molybdenum oxide, and is an n-type semiconductor. For example, as illustrated in Fig. 2, the at least one metal oxide 32 has a form of fine particles. For example, the charging layer 3 has a structure in which fine particles of the at least one metal oxide 32 are dispersed in the insulating material 31.

Examples of the niobium oxide in the present embodiment include Nb₂O₅. Examples of the tantalum oxide in the present embodiment include Ta₂O₅. Examples of the molybdenum oxide in the present embodiment include MoO₃. The oxidation number of niobium in the niobium oxide is not particularly limited as long as the charging layer 3 exhibits desired charging/discharging functions. Similarly, the oxidation number of tantalum in the tantalum oxide and the oxidation number of molybdenum in the molybdenum oxide are not particularly limited. The niobium oxide, the tantalum oxide and the molybdenum oxide in the present embodiment do not necessarily have a stoichiometric composition.

The niobium oxide in the present embodiment may be a material including niobium and oxygen or may be a material including niobium, oxygen and M¹ (M¹ is at least one element selected from the group consisting of titanium, tin and zinc). The tantalum oxide in the present embodiment may be a material including tantalum and oxygen or may be a material including tantalum, oxygen and M² (M² is at least one element selected from the group consisting of titanium, niobium, tin and zinc). The molybdenum oxide in the present embodiment may be a material including molybdenum and oxygen or may be a material including molybdenum, oxygen and M².

For example, the thickness of the charging layer 3 is in the range of 50 nm to 10 µm.

The average particle diameter of the particles of the at least one metal oxide 32 present in the charging layer 3 is desirably 1 nm to 20 nm. The average particle diameter is more desirably 6 nm or less. The average particle diameter of the at least one metal oxide 32 may be calculated in the following manner. First, the at least one metal oxide 32 is observed with an electron microscope (SEM or TEM). The area S of any particle of the at least one metal oxide 32 in the obtained image is measured, and the particle diameter "a" of that particle of the at least one metal oxide 32 is calculated using the following equation: a = 2 x (S/3.14)^{1/2}. The particle diameters "a" of randomly-selected fifty particles of the at least one metal oxide 32 are measured, and the average is obtained as the average particle diameter of the primary particles of the at least one metal oxide 32.

When the charging layer 3 includes a plurality of metal oxides 32 including niobium oxide, the molar ratio of the niobium oxide relative to the total of the metal oxides 32 in the charging layer 3 is, for example, 60 mol% or more. When the charging layer 3 includes a plurality of metal oxides 32 including tantalum oxide, the molar ratio of the tantalum oxide relative to the total of the metal oxides 32 in the charging layer 3 is, for example, 60 mol% or more. When the charging layer 3 includes a plurality of metal oxides 32 including molybdenum oxide, the molar ratio of the molybdenum oxide relative to the total of the metal oxides 32 in the charging layer 3 is, for example, 60 mol% or more. The charging layer 3 may include 60 mol% or more of other type of a metal oxide 32.

The content ratio between the insulating material 31 and the at least one metal oxide 32 in the charging layer 3 is not particularly limited. For example, the charging layer 3 may contain the insulating material 31 and the at least one metal oxide 32 in a ratio of 10:90 to 90:10 wherein the total weight of the insulating material 31 and the at least one metal oxide 32 present in the charging layer 3 is taken as 100.

The p-type semiconductor 4 can prevent the movement of electrons from the second electrode layer 5 to the charging layer 3. Examples of the p-type semiconductors include materials containing nickel oxide, copper oxide, copper aluminum oxide, tin oxide or a mixture of any of these oxides.

Examples of the nickel oxide in the present embodiment include NiO. The nickel oxide in the present embodiment may be a material including nickel and oxygen or may be a material including nickel, oxygen and an additional element other than nickel and oxygen. The copper oxide in the present embodiment may be a material including copper and oxygen or may be a material including copper, oxygen and an additional element other than copper and oxygen. Examples of the copper aluminum oxide in the present embodiment include CuAlO₂. The tin oxide in the present embodiment may be a material including tin and oxygen or may be a material including tin, oxygen and an additional element other than tin and oxygen.

For example, the thickness of the p-type semiconductor 4 is in the range of 10 nm to 1000 nm.

The electrical storage device 10 is charged and discharged probably by the following mechanism. When a negative voltage with reference to the second electrode layer 5 is applied to the first electrode layer 2, electrons are moved from the first electrode layer 2 to the charging layer 3. The electrons that have been moved pass through the insulating material 31 in the charging layer 3 and are captured into an energy level formed in a bandgap of energy levels present in the at least one metal oxide 32 or at an interface between the at least one metal oxide 32 and the insulating material 31. Specifically, the electrons that have been moved to the charging layer 3 are prevented from being further moved to the second electrode layer 5 by the p-type semiconductor 4, and consequently the electrons are captured into an energy level present in the at least one metal oxide 32 or at an interface between the at least one metal oxide 32 and the insulating material 31. In this manner, electrons are stored (charged state). This state is maintained even after the voltage application is discontinued. Namely, the electrical storage device fulfills the charging function. When, on the other hand, loads are connected to the first electrode layer 2 and the second electrode layer 5 for discharging, the electrons that have been captured in the energy level present in the at least one metal oxide 32 or at the interface between the at least one metal oxide 32 and the insulating material 31 are moved to the first electrode layer 2 and flow to the load (discharged state). These phenomena may be repeated. Thus, the electrical storage device 10 may function as a secondary battery or a capacitor.

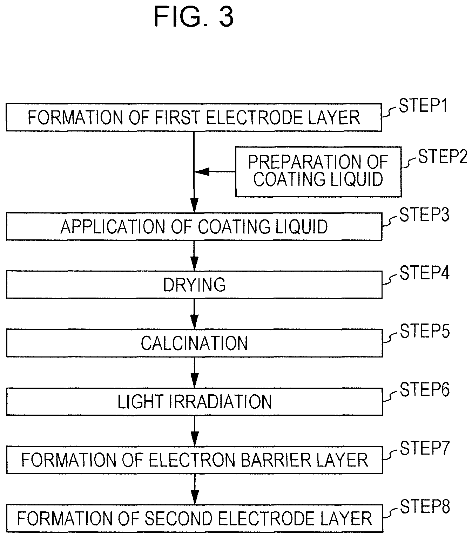

A method for manufacturing the electrical storage device of the present embodiment will be described with reference to Fig. 3. Fig. 3 is a process chart illustrating a method for manufacturing the electrical storage device 10 shown in Fig. 1.

In the step (1), the first electrode layer 2 is formed on the substrate 1. When, for example, a metal is used for the first electrode layer 2, the first electrode layer 2 may be fabricated by a method such as sputtering, vacuum deposition, pulse laser deposition (PLD), chemical vapor deposition (CVD), electrolytic plating, atomic layer deposition (ALD), thermal spraying, cold spraying or aerosol deposition. Alternatively, the first electrode layer 2 may be formed by a coating method such as spin coating, dip coating, bar coating, level coating or spray coating. However, the forming methods are not particularly limited to those mentioned above. In the case where a conductive material is used as the substrate 1, the substrate 1 itself may be used as the first electrode layer 2 and the formation of the first electrode layer 2 may be omitted.

Next, the formation of the charging layer 3 on the first electrode layer 2 will be described. In the step (2), the insulating material and at least one selected from aliphatic acid salts and aromatic acid salts are dissolved in an organic solvent to give a coating liquid. The aliphatic acid salts in the present embodiment are typically aliphatic acid metal salts. The aromatic acid salts in the present embodiment are typically aromatic acid metal salts. In the present embodiment, the at least one metal oxide 32 is formed by the decomposition of an aliphatic acid metal salt or an aromatic acid metal salt (hereinafter, also written collectively as "organic acid metal salt"). The aliphatic acid metal salts and the aromatic acid metal salts used in the present embodiment are those metal salts which may be decomposed or combusted into metal oxides by the irradiation with UV ray in an oxidizing atmosphere or by calcination.

In the present embodiment, the coating liquid may be prepared by dissolving in an organic solvent the insulating material and at least one metal salt selected from the group consisting of aliphatic acid niobium salts, aliphatic acid tantalum salts, aliphatic acid molybdenum salts, aromatic acid niobium salts, aromatic acid tantalum salts and aromatic acid molybdenum salts. These metal salts may efficiently form n-type semiconducting niobium oxide, tantalum oxide and molybdenum oxide.

Examples of the aliphatic acids used in the present embodiment include aliphatic carboxylic acids. Examples of the aliphatic carboxylic acids used in the present embodiment include aliphatic monocarboxylic acids and aliphatic polycarboxylic acids. Examples of the aliphatic polycarboxylic acids in the present embodiment include aliphatic dicarboxylic acids, aliphatic tricarboxylic acids, aliphatic tetracarboxylic acids and combinations of any of these acids. Examples of the aliphatic monocarboxylic acids in the present embodiment include formic acid, acetic acid, propionic acid, butyric acid, valeric acid, caproic acid, heptanoic acid, hexanoic acid, nonanoic acid, enanthic acid, caprylic acid, pelargonic acid, capric acid, lauric acid, myristic acid, palmitic acid, margaric acid, stearic acid, acrylic acid, butenoic acid, crotonic acid, isocrotonic acid, linolenic acid, oleic acid, linoleic acid, arachidonic acid, docosahexaenoic acid, eicosapentaenoic acid, pyruvic acid, lactic acid and combinations of any of these acids. Of these, highly unsaturated fatty acids are preferable. The highly unsaturated fatty acids are fatty acids having 4 or more unsaturated bonds. Examples of the aliphatic dicarboxylic acids in the present embodiment include oxalic acid, malonic acid, succinic acid, glutaric acid, adipic acid, maleic acid, fumaric acid, tartaric acid, malic acid and combinations of any of these acids. Examples of the aliphatic tricarboxylic acids in the present embodiment include citric acid and combinations of citric acid and other aliphatic tricarboxylic acids. Examples of the aliphatic tetracarboxylic acids in the present embodiment include 1,2,3,4-butanetetracarboxylic acid. Metal salts of these aliphatic acids may be used singly, or a mixture of metal salts of aliphatic acids may be used.

Examples of the aromatic acids used in the present embodiment include aromatic carboxylic acids. Examples of the aromatic carboxylic acids used in the present embodiment include aromatic monocarboxylic acids, aromatic polycarboxylic acids and mixtures of any of these acids. Examples of the aromatic polycarboxylic acids in the present embodiment include aromatic dicarboxylic acids, aromatic tricarboxylic acids, aromatic tetracarboxylic acids, aromatic hexacarboxylic acids and mixtures of any of these acids. Examples of the aromatic monocarboxylic acids in the present embodiment include benzoic acid, salicylic acid, cinnamic acid, gallic acid and mixtures of any of these aids. Examples of the aromatic dicarboxylic acids in the present embodiment include phthalic acid, isophthalic acid and terephthalic acid. Examples of the aromatic tricarboxylic acids in the present embodiment include trimellitic acid. Examples of the aromatic tetracarboxylic acids in the present embodiment include pyromellitic acid. Examples of the aromatic hexacarboxylic acids in the present embodiment include mellitic acid. Metal salts of these aromatic acids may be used singly, or a mixture of metal salts of aromatic acids may be used.

The organic acid metal salts are preferred materials for forming the at least one metal oxide 32 for reasons such as (i) they are easily decomposed or combusted by heating, (ii) they have high solubility with respect to solvents, (iii) they can form dense films after being decomposed or combusted, (iv) they are easily handled and inexpensive, and (v) they are synthesized easily. For example, carboxylic acids having a branched alkyl group such as 2-ethylhexanoic acid are widely used because such carboxylic acids are liquid at room temperature and exhibit high solubility in solvents. However, the use of salts of carboxylic acids having a branched alkyl group such as 2-ethylhexanoic acid often results in the occurrence of cracks due to the shrinkage of coating films during calcination. Further, the film density tends to be low, and the formation of films with uniform properties is difficult. Thus, the use of carboxylic acids having a linear alkyl group is more desirable than using branched carboxylic acids having a bulky branch.

The organic solvents used in the present embodiment may be any organic solvents which can dissolve the organic acid metal salts and the insulating materials. Examples thereof include hydrocarbon solvents, alcohol solvents, ester solvents, ether solvents, ketone solvents and mixtures of any of these solvents. Specific examples of the organic solvents in the present embodiment include ethanol, xylene, butanol, acetylacetone, ethyl acetoacetate, methyl acetoacetate and mixtures of any of these solvents.

In the step (3), the coating liquid is applied onto the first electrode layer 2. Exemplary techniques which may be used to apply the coating liquid include spin coating, dip coating, bar coating, level coating and spray coating. When, for example, the coating liquid is applied by spin coating, the coating liquid may be spin coated onto the first electrode layer 2 with use of a spinner while rotating the substrate 1 supporting the first electrode layer 2. By this method, a coating film with a thickness of 0.3 to 3 µm may be formed.

In the step (4), the coating film is dried so as to remove appropriately the organic solvent from the coating film formed on the first electrode layer 2. The coating film may be allowed to dry naturally at room temperature or may be dried by being heated to an elevated temperature above room temperature. For example, the coating film may be dried by being allowed to stand in an atmosphere at 50°C for about 10 minutes. The step (4) may be omitted when the organic solvent in the coating film has high volatility.

In the step (5), the coating film is calcined. The calcination decomposes or combusts the organic acid metal salt present in the coating film, thus forming a layer containing the insulating material 31 and the at least one metal oxide 32. In detail, the calcination forms a matrix composed of the insulating material 31 and particles of the at least one metal oxide 32 dispersed in the matrix of the insulating material 31. For example, the calcination may be performed at a temperature of 300 to 500°C for about 10 minutes to 1 hour. The above method for the formation of the metal oxide fine particles dispersed in the insulating material is a process called metal organic decomposition.

In the step (6), the coating film that has been calcined in the step (5) is irradiated with UV ray to form the charging layer 3. The UV irradiation apparatus may be a low-pressure mercury lamp, a high-pressure mercury lamp or a metal halide lamp. For example, the UV irradiation conditions may be such that the irradiation wavelength is 254 nm, the irradiation intensity is 50 mW/cm² and the irradiation time is 30 minutes or more. The UV irradiation conditions may be such that the irradiation wavelength is 254 nm, the irradiation intensity is 100 mW/cm² and the irradiation time is 30 to 90 minutes.

In the step (7), the p-type semiconductor 4 is formed on the charging layer 3. Here, the forming method may be sputtering, ion plating, electron beam deposition, vacuum deposition, chemical deposition, chemical vapor deposition or coating.

In the step (8), the conductive second electrode layer 5 is formed on the p-type semiconductor 4. The second electrode layer 5 may be formed by a method similar to the method for forming the first electrode layer 2.

By the aforementioned steps, the electrical storage device 10 described with reference to Figs. 1 and 2 may be obtained. In the embodiment illustrated in Fig. 1, the first electrode layer 2, the charging layer 3, the p-type semiconductor 4 and the second electrode layer 5 are stacked on the substrate 1 in this order. The order of stacking may be reversed. That is, the second electrode layer 5, the p-type semiconductor 4, the charging layer 3 and the first electrode layer 2 may be stacked in this order on the substrate 1.

For example, the shape of the electrical storage device in the present disclosure is rectangular as will be described in Examples later. However, the shapes of the electrical storage devices are not limited to rectangular shapes and may be other shapes such as circles or ellipses. The electrical storage devices of the present disclosure may be disposed on both of the front side and the back side of the substrate. Further, the electrical storage devices of the present disclosure may be stacked in the thickness direction to realize high capacity. Furthermore, the electrical storage devices may be produced into various forms such as folded or wound forms in accordance with the shapes and the applications. The electrical storage devices may have any appearances as desired such as cylindrical types, square types, button types, coin types and flat types. The shapes and the configurations of the electrical storage devices are not limited to those described above.

### Examples

The present disclosure will be described in detail based on Examples. However, the scope of the present disclosure is not limited to such Examples.

### <Example 1>

An electrical storage device was fabricated using a 3 cm square stainless steel substrate having a thickness of 0.4 mm. No first electrode layer was formed, and the stainless steel substrate was used as the substrate and also as an electrode. A charging layer was formed in the following manner. 1.14 g of xylene as a solvent was mixed together with 0.72 g of niobium heptanoate and 0.33 g of silicone oil. The mixture was stirred to give a coating liquid. Onto the stainless steel substrate that had been cleaned, the coating liquid was spin coated with use of a spinner (1200 rpm, 10 seconds). The stainless steel substrate that had been spin coated with the coating liquid was placed onto a hot plate heated at 50°C and the wet film was dried for 10 minutes. The film was thereafter calcined to form a coating film. The calcination temperature was 420°C and the calcination time was 10 minutes. Next, the coating film on the stainless steel substrate was irradiated with UV ray applied from a metal halide lamp, thereby forming a charging layer. The irradiation conditions were such that the wavelength was 254 nm, the intensity was 131 mW/cm² and the irradiation time was 90 minutes. The charging layer had a structure in which the matrix was composed of silicone and fine particles of niobium oxide were substantially uniformly dispersed in the matrix. The sizes of the fine particles were greater than 2 nm but were less than 6 nm.

After the formation of the charging layer, a mask having a 2 cm square opening was formed on the charging layer. A p-type semiconductor layer as an electron barrier layer was formed by sputtering a nickel oxide (NiO) layer having a thickness of 100 nm with use of a high-frequency magnetron sputtering apparatus. Similarly, an aluminum (Al) layer with a thickness of 300 nm was formed as a second electrode on the p-type semiconductor layer using the high-frequency magnetron sputtering apparatus. An electrical storage device was thus fabricated. The drive area of the electrical storage device was 4 cm².

### <Example 2>

Stainless steel that was a conductive metal was used as a substrate. Because stainless steel was capable of serving also as a first electrode layer, the formation of a first electrode layer was omitted. Niobium oxide containing niobium and oxygen was used as a metal oxide, and SiO₂ was used as an insulating material for the formation of a charging layer. The substrate had a 3 cm square surface and a thickness of 0.4 mm.

A charging layer was produced as described in detail below. First, niobium heptanoate, silicone oil and xylene as a solvent were mixed together and the mixture was stirred to give a coating liquid. Next, the coating liquid was applied onto the substrate while rotating the substrate with use of a spin coater at a rotational speed of 1200 rpm, thereby forming a wet film. Next, the wet film was dried by being allowed to stand at 50°C for about 10 minutes. Thereafter, the film was calcined at 420°C for 60 minutes. These steps caused the niobium heptanoate and the silicone oil to be decomposed, resulting in niobium oxide fine particles dispersed in a SiO₂ insulating material.

Next, the coating film that had been calcined was irradiated with UV ray applied from a low-pressure mercury lamp, thereby forming a charging layer. The irradiation conditions were such that the UV ray wavelength was 254 nm, the irradiation intensity was 70 mW/cm² and the irradiation time was 240 minutes.

Next, an electron barrier layer was formed on the charging layer by sputtering NiO. The thickness of the electron barrier layer was 300 nm. Lastly, a second electrode layer was formed on the electron barrier layer by the sputtering of tungsten. The thickness of the second electrode layer was 300 nm.

### <Example 3>

Stainless steel that was a conductive metal was used as a substrate. Because stainless steel was capable of serving also as a first electrode layer, the formation of a first electrode layer was omitted. Tantalum oxide containing tantalum and oxygen was used as a metal oxide, and SiO₂ was used as an insulating material for the formation of a charging layer. The substrate had a 3 cm square surface and a thickness of 0.4 mm.

A charging layer was produced as described in detail below. First, tantalum heptanoate, silicone oil and xylene as a solvent were mixed together and the mixture was stirred to give a coating liquid. Next, the coating liquid was applied onto the substrate while rotating the substrate with use of a spin coater at a rotational speed of 1200 rpm, thereby forming a wet film. Next, the wet film was dried by being allowed to stand at 50°C for about 10 minutes. Thereafter, the film was calcined at 420°C for 10 minutes. These steps caused the tantalum heptanoate and the silicone oil to be decomposed, resulting in tantalum oxide fine particles dispersed in a SiO₂ insulating material (film thickness: 800 nm).

Next, the coating film that had been calcined was irradiated with UV ray applied from a low-pressure mercury lamp, thereby forming a charging layer. The irradiation conditions were such that the UV ray wavelength was 254 nm, the irradiation intensity was 70 mW/cm² and the irradiation time was 30 minutes.

Next, an electron barrier layer was formed on the charging layer by sputtering NiO. The thickness of the electron barrier layer was 300 nm. Lastly, a second electrode layer was formed on the electron barrier layer by the sputtering of tungsten. The thickness of the second electrode layer was 300 nm.

### <Example 4>

Stainless steel that was a conductive metal was used as a substrate. Because stainless steel was capable of serving also as a first electrode layer, the formation of a first electrode layer was omitted. Molybdenum oxide containing molybdenum and oxygen was used as a metal oxide, and SiO₂ was used as an insulating material for the formation of a charging layer. The substrate had a 3 cm square surface and a thickness of 0.4 mm.

A charging layer was produced as described in detail below. First, molybdenum heptanoate, silicone oil and xylene as a solvent were mixed together and the mixture was stirred to give a coating liquid. Next, the coating liquid was applied onto the substrate while rotating the substrate with use of a spin coater at a rotational speed of 1200 rpm, thereby forming a wet film. Next, the wet film was dried by being allowed to stand in the air. Thereafter, the film was calcined at 420°C for 60 minutes. These steps caused the molybdenum heptanoate and the silicone oil to be decomposed, resulting in molybdenum oxide fine particles dispersed in a SiO₂ insulating material.

Next, the coating film was irradiated with UV ray applied from a low-pressure mercury lamp, thereby forming a charging layer. The irradiation conditions were such that the UV ray wavelength was 254 nm, the irradiation intensity was 70 mW/cm² and the irradiation time was 120 minutes.

Next, an electron barrier layer was formed on the charging layer by sputtering NiO. The thickness of the electron barrier layer was 300 nm. Lastly, a second electrode layer was formed on the electron barrier layer by the sputtering of tungsten. The thickness of the second electrode layer was 300 nm.

### <Comparative Example 1>

An electrical storage device was fabricated using the same materials and by the same method as in Example 1, except that the charging layer was formed using a coating liquid obtained by mixing 0.72 g of titanium heptanoate, 1.14 g of xylene and 0.33 g of silicone oil. The charging layer had a structure in which the matrix was silicone and titanium oxide (TiO₂) fine particles were substantially uniformly dispersed in the matrix.

### [Evaluation of charge/discharge characteristics of electrical storage devices]

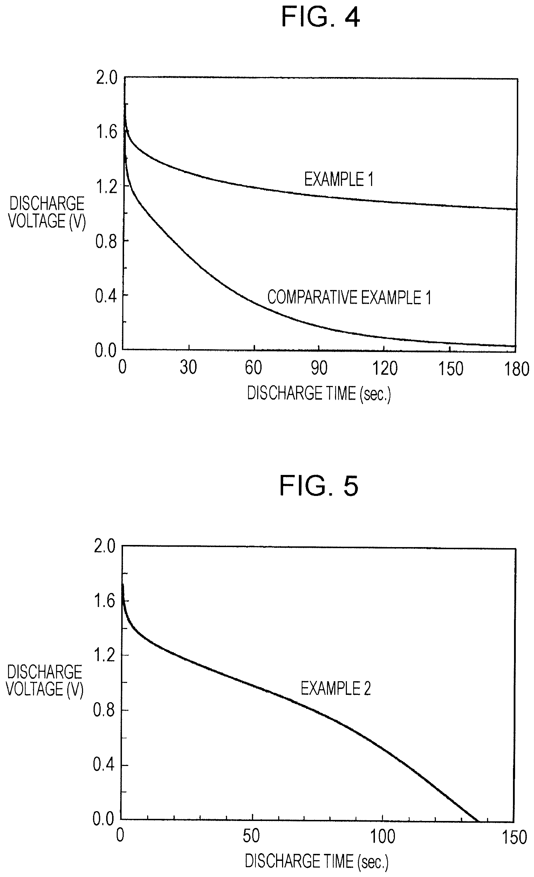

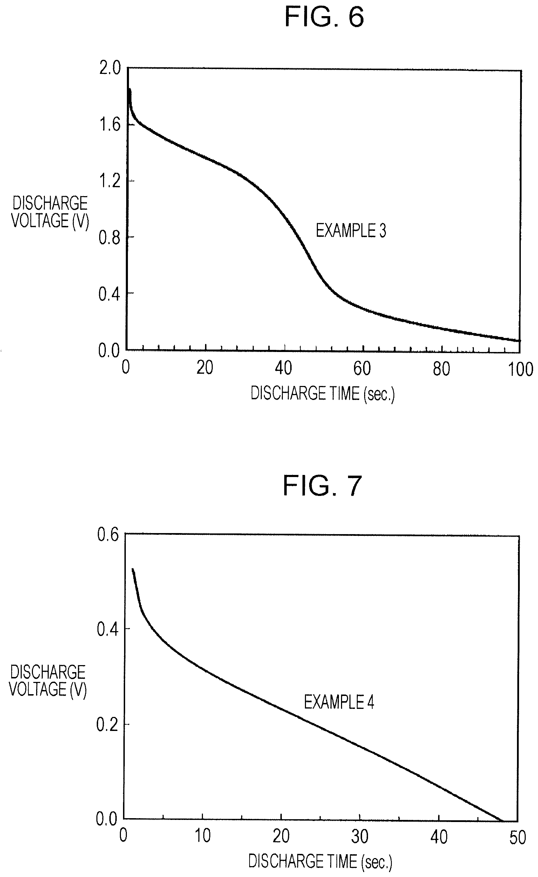

The charge/discharge characteristics of the electrical storage devices of Examples 1 to 4 and Comparative Example 1 were evaluated by the following method. A voltage of 2 V was applied to the second electrode of the electrical storage device for 5 minutes in a 25°C environment, thereby storing electricity. The discharge capacity of the electrical storage device was measured with use of multichannel electrochemical measurement system 1470E manufactured by Solartron. The discharge current density was 50 µA/cm² and the discharging cutoff voltage was 0 V. A larger discharge capacity indicates higher charge/discharge characteristics. The evaluation results of Example 1 and Comparative Example 1 are described in Table 1, and the evaluation results of Examples 2 to 4 are shown in Table 2. Figs. 4 to 7 are graphs illustrating the discharge voltage versus the discharge time.

**Table 1**

| | Metal oxide in charging layer | Discharge capacity (µWh) |
|---|---|---|
| Example 1 | Niobium oxide | 0.063 |
| Comparative Example 1 | Titanium oxide | 0.00026 |

**Table 2**

| | Metal oxide in charging layer | Discharge capacity (µWh) |
|---|---|---|
| Example 2 | Niobium oxide | 1.5 |
| Example 3 | Tantalum oxide | 1.0 |
| Example 4 | Molybdenum oxide | 0.129 |

The metal oxide in Example 1 and Example 2 was niobium oxide. Example 2 resulted in a larger discharge capacity than in Example 1. This difference in discharge capacity between Example 1 and Example 2 is probably due to the difference in the conditions for the fabrication of the electrical storage devices, in particular, the difference in UV irradiation time.

The electrical storage devices of Examples 1 to 4 achieved a larger discharge capacity than the electrical storage device of Comparative Example 1. This result shows that the use of niobium oxide, tantalum oxide or molybdenum oxide as the metal oxide in the charging layer enables the electrical storage devices to exhibit a higher capacity as compared to the conventional electrical storage devices having titanium oxide or tin oxide as the charging layer. Further, the configuration or structure may be simplified as compared to lithium ion batteries including liquid electrolytes. The techniques of the present disclosure make it possible to realize electrical storage devices which have a simple configuration and are thus producible at low cost and which also have high safety and high capacity.

The electrical storage devices disclosed in the present specification are all-solid-state devices and are hence highly safe while being operable stably. The electrical storage devices disclosed in the specification are producible easily without the use of expensive materials, thus realizing a reduction of cost. Further, the electrical storage devices disclosed in the specification are excellent in charge/discharge characteristics. Because the electrical storage devices disclosed in the specification have high safety and high capacity, they may be used as secondary batteries in digital information devices such as notebook computers, mobile phones, tablets and smart phones, and also may be used in the field of automobiles as secondary batteries for hybrid vehicles and electrical vehicles.

## Claims

1. An electrical storage device (10) comprising a stack structure, the stack structure including:
a conductive first electrode layer (2),
a conductive second electrode layer (5),
a charging layer (3) disposed between the first electrode layer (2) and the second electrode layer (5), the charging layer (3) including a mixture containing an insulating material and at least one metal oxide, the at least one metal oxide being an n-type semiconductor, and
a p-type semiconductor (4) disposed between the charging layer (3) and the second electrode layer (5),
**characterized in that** the at least one metal oxide is selected from the group consisting of niobium oxide, tantalum oxide and molybdenum oxide.

2. The electrical storage device according to Claim 1, wherein the at least one metal oxide is the niobium oxide.

3. The electrical storage device according to Claim 1, wherein the at least one metal oxide is the tantalum oxide.

4. The electrical storage device according to Claim 1, wherein the at least one metal oxide is the molybdenum oxide.

5. The electrical storage device according to any one of Claims 1 to 4, wherein the first electrode layer (2) or the second electrode layer (5) includes a metal or an alloy including at least one metal element selected from the group consisting of aluminum, gold, chromium, copper, iron, molybdenum, nickel, palladium, platinum and tungsten.

6. The electrical storage device according to any one of Claims 1 to 5, further comprising a substrate (1) disposed on an outside of the first electrode layer (2).

7. The electrical storage device according to any one of Claims 1 to 6, wherein the p-type semiconductor (4) includes nickel oxide, copper oxide, copper aluminum oxide or tin oxide.

8. The electrical storage device according to any one of Claims 1 to 7, wherein the insulating material includes silicon oxide.

9. The electrical storage device according to any one of Claims 1 to 7, wherein the insulating material is a silicone.

10. The electrical storage device according to Claim 6, wherein the substrate (1) is a flexible insulating sheet.

11. The electrical storage device according to any one of Claims 1 to 10, wherein the charging layer (3) is such that fine particles of the at least one metal oxide are dispersed in the insulating material.

12. A method for manufacturing an electrical storage device (10) including a first electrode layer (2), a charging layer (3), a p-type semiconductor (4) and a second electrode layer (5) stacked on top of one another in this order, the method comprising:
preparing a coating liquid by dissolving at least one metal salt and an insulating material into an organic solvent, the at least one metal salt being selected from the group consisting of aliphatic acid niobium salts, aliphatic acid tantalum salts, aliphatic acid molybdenum salts, aromatic acid niobium salts, aromatic acid tantalum salts and aromatic acid molybdenum salts,
applying the coating liquid to the first electrode layer (2) to form a coating film,
calcining the coating film,
irradiating the calcined coating film with UV ray to form the charging layer (3) including a mixture containing the insulating material and at least one metal oxide, the at least one metal oxide being an n-type semiconductor, and
after the formation of the charging layer (3), forming the p-type semiconductor (4) and the second electrode layer (5) in this order.

13. The method according to Claim 12, wherein the at least one metal oxide is selected from the group consisting of niobium oxide, tantalum oxide and molybdenum oxide.

## Patentansprüche

1. Elektrische Speichervorrichtung (10), umfassend eine Stapelstruktur, wobei die Stapelstruktur umfasst:
eine leitfähige erste Elektrodenschicht (2),
eine leitfähige zweite Elektrodenschicht (5), eine Ladeschicht (3), die zwischen der ersten Elektrodenschicht (2) und der zweiten Elektrodenschicht (5) angeordnet ist, wobei die Ladeschicht (3) ein Gemisch enthält, das ein isolierendes Material und wenigstens ein Metalloxid beinhaltet, wobei das wenigstens eine Metalloxid ein n-Typ-Halbleiter ist, und
einen p-Typ-Halbleiter (4), der zwischen der Ladeschicht (3) und der zweiten Elektrodenschicht (5) angeordnet ist,
**dadurch gekennzeichnet, dass** das wenigstens eine Metalloxid aus der Gruppe gewählt ist, die aus Nioboxid, Tantaloxid und Molybdänoxid besteht.

2. Elektrische Speichervorrichtung nach Anspruch 1, bei der das wenigstens eine Metalloxid das Nioboxid ist.

3. Elektrische Speichervorrichtung nach Anspruch 1, bei der das wenigstens eine Metalloxid das Tantaloxid ist.

4. Elektrische Speichervorrichtung nach Anspruch 1, bei der das wenigstens eine Metalloxid das Molybdänoxid ist.

5. Elektrische Speichervorrichtung nach einem der Ansprüche 1 bis 4, bei der die erste Elektrodenschicht (2) oder die zweite Elektrodenschicht (5) ein Metall oder eine Legierung mit wenigstens einem Metallelement enthält, das aus der Gruppe gewählt ist, die aus Aluminium, Gold, Chrom, Kupfer, Eisen, Molybdän, Nickel, Palladium, Platin und Wolfram besteht.

6. Elektrische Speichervorrichtung nach einem der Ansprüche 1 bis 5, weiterhin umfassend ein Substrat (1), das auf einer Außenseite der ersten Elektrodenschicht (2) angeordnet ist.

7. Elektrische Speichervorrichtung nach einem der Ansprüche 1 bis 6, bei der der p-Typ-Halbleiter (4) Nickeloxid, Kupferoxid, Kupferaluminiumoxid oder Zinnoxid enthält.

8. Elektrische Speichervorrichtung nach einem der Ansprüche 1 bis 7, bei der das Isoliermaterial Siliziumoxid enthält.

9. Elektrische Speichervorrichtung nach einem der Ansprüche 1 bis 7, bei der das Isoliermaterial ein Silikon ist.

10. Elektrische Speichervorrichtung nach Anspruch 6, bei der das Substrat (1) ein flexibles Isolierblatt ist.

11. Elektrische Speichervorrichtung nach einem der Ansprüche 1 bis 10, bei der die Ladeschicht derart beschaffen ist, dass feine Teilchen des wenigstens einen Metalloxids in dem isolierenden Material dispergiert sind.

12. Verfahren für die Herstellung einer elektrischen Speichervorrichtung (10), umfassend eine erste Elektrodenschicht (2), eine Ladeschicht (3), einen p-Typ-Halbleiter (4) und eine zweite Elektrodenschicht (5), die in dieser Reihenfolge übereinander gestapelt sind, wobei das Verfahren umfasst:
Vorbereiten einer Beschichtungsflüssigkeit durch Auflösen von wenigstens einem Metallsalz und einem isolierenden Material in einem organischen Lösungsmittel, wobei das wenigstens eine Metallsalz aus der Gruppe gewählt ist, die aus aliphatischen Säure-Niob-Salzen, aliphatischen Säure-Tantalsalzen, aliphatischen Säure-Molybdän-Salzen, aromatischen Säure-Niob-Salzen, aromatischen Säure-Tantalsalzen und aromatischen Säure-Molybdän-Salzen besteht,
Aufbringen der Beschichtungsflüssigkeit auf die erste Elektrodenschicht (2), um einen Beschichtungsfilm auszubilden,
Kalzinieren des Beschichtungsfilms,
Bestrahlen des kalzinierten Beschichtungsfilms mit UV-Strahlung für die Ausbildung der Ladeschicht (3), die ein Gemisch enthält, das das Isoliermaterial und wenigstens ein Metalloxid beinhaltet, wobei das wenigstens eine Metalloxid ein n-Typ-Halbleiter ist, und
nach dem Ausbilden der Ladeschicht (3), Ausbilden des p-Typ-Halbleiters (4) und der zweiten Elektrodenschicht (5) in dieser Reihenfolge.

13. Verfahren nach Anspruch 12, bei dem das wenigstens eine Metalloxid aus der Gruppe gewählt ist, die aus Nioboxid, Tantaloxid und Molybdänoxid besteht.

## Revendications

1. Composant de stockage de l'électricité (10) comprenant une structure de pile, la structure de pile incluant :
une première couche d'électrode conductrice (2),
une seconde couche d'électrode conductrice (5),
une couche de charge (3) disposée entre la première couche d'électrode (2) et la seconde couche d'électrode (5), la couche de charge (3) incluant un mélange dans le matériau isolant et au moins un oxyde métallique, le ou les oxydes métallique représentant un semi-conducteur de type n, et
un semi-conducteur de type p (4) disposé entre la couche de charge (3) et la seconde couche d'électrode (5),
**caractérisé en ce que** le ou les oxydes métallique sont sélectionnés à partir du groupe constitué de : oxyde de niobium, oxyde de tantale et oxyde de molybdène.

2. Composant de stockage de l'électricité (10) selon la revendication 1, dans lequel le ou les oxydes métalliques sont l'oxyde de niobium.

3. Composant de stockage de l'électricité (10) selon la revendication 1, dans lequel le ou les oxydes métalliques sont l'oxyde de tantale.

4. Composant de stockage de l'électricité (10) selon la revendication 1, dans lequel le ou les oxydes métalliques sont l'oxyde de molybdène.

5. Composant de stockage de l'électricité (10) selon l'une quelconque des revendications 1 à 4, dans lequel la première couche d'électrode (2) ou la seconde couche d'électrode (5) inclut un métal ou un alliage incluant au moins un élément métallique sélectionné à partir du groupe constitué de l'aluminium, l'or, le chrome, le cuivre, le fer, le molybdène, le nickel, le palladium, le platine et le tungstène.

6. Composant de stockage de l'électricité (10) selon l'une quelconque des revendications 1 à 5, comprenant en outre un substrat (1) placé sur l'extérieur de la première couche d'électrode (2).

7. Composant de stockage de l'électricité (10) selon l'une quelconque des revendications 1 à 6, dans lequel le semi-conducteur de type p (4) inclut un oxyde de nickel, un oxyde de cuivre, un oxyde de cuivre aluminium ou un oxyde d'étain.

8. Composant de stockage de l'électricité (10) selon l'une quelconque des revendications 1 à 7, dans lequel le matériau isolant inclut un oxyde de silicium.

9. Composant de stockage de l'électricité (10) selon l'une quelconque des revendications 1 à 7, dans lequel le matériau isolant est une silicone.

10. Composant de stockage de l'électricité (10) selon la revendication 6, dans lequel le substrat (1) est une feuille isolante souple.

11. Composant de stockage de l'électricité (10) selon l'une quelconque des revendications 1 à 10, dans lequel la couche de charge (3) est telle que des particules fines du ou des oxydes métallique sont dispersées dans le matériau isolant.

12. Procédé de fabrication d'un composant de stockage de l'électricité (10) incluant une première couche d'électrode (2), une couche de charge (3), un semi-conducteur de type p (4) et une seconde couche d'électrode (5) empilés les uns sur les autres dans cet ordre, le procédé comprenant :
la préparation d'un liquide d'enduction en dissolvant au moins un sel métallique et un matériau isolant dans un solvant organique, le ou les sels métalliques étant sélectionnés à partir du groupe constitué de sels d'acide aliphatique de niobium, sels d'acide aliphatique de tantale, sels d'acide aliphatique de molybdène, sels d'acide aromatique de niobium, sels d'acide aromatique de tantale et sels d'acide aromatique de molybdène,
l'application du liquide d'enduction sur la première couche d'électrode (2) pour former un film de revêtement,
la calcination du film de revêtement,
l'irradiation du film de revêtement calciné avec des rayons ultraviolets pour former la couche de charge (3) en incluant un mélange contenant le matériau isolant et au moins un oxyde métallique, le ou les oxydes métallique représentant un semi-conducteur de type n, et
après la formation de la couche de charge (3), la formation du semi-conducteur de type p (4) et de la seconde couche d'électrode (5) dans cet ordre.

13. Procédé selon la revendication 12, dans lequel le ou les oxydes métallique sont sélectionnés à partir du groupe constitué de : oxyde de niobium, oxyde de tantale et oxyde de molybdène.
